# EUROPEAN PATENT APPLICATION

(11) **EP 2 447 900 A1**
(43) Date of publication of application: **02.05.2012**
(21) Application number: 10306115.6
(22) Date of filing: 14.10.2010
(51) Int. Cl.: G06Q 30/00, G06Q 50/00

(54) **Method for automatically generating a text portion**

(71) Applicant: Amadeus S.A.S., 06410 Biot (FR)
(72) Inventor: Gavrel, Christophe, 06110, Le Cannet (FR); Seno Martine, 06700, St Laurent du Var (FR); Andres Embid, Juan Jose, 06400, Cannes (FR); Prezet, Hervé, 06250, Mougins (FR)
(74) Representative: Decobert, Jean-Pascal

(57) **Abstract**

Method for automatically generating a text portion applicable to a customer for at least one product, characterized in that it comprises, at a server side based on a plurality of data. According to the invention, rules data are processed so that a reduced rule is obtained and further used for generating the text portions with an engine dedicated to this task.

## Description

### TECHNICAL FIELD

The present invention relates in general to the field of data processing. One particular application is for transportation services and ticket reservations for same. More specifically, the invention relates to a ticket reservation system based on rules to process a traveler's request and a method thereof.

### BACKGROUND

Actual reservation system for booking airline tickets are currently based on a big number of rules stored in several databases of airlines companies. This way, when a user enters his personal information along with his departure and destination preferences to request a travel, he automatically triggers a search for potential travel products defined by various definition data such as origin, destination, dates, flight number...and fare data. A set of rules is also involved. It describes under which conditions a fare can be applied to a product for a customer (in that case a passenger) for a given itinerary. In general, it is known that every rule includes categories and every category further comprises records. These records hold specific information that may concern the passenger. After applying fare data and these rules based on the request of the passenger, a search for a suitable travel is initiated and the result is thereafter displayed to the requester in the form of at least one product option.

The prior art is basically a search function based on rules. The rules are different from one Airline Company to another, which creates a huge amount of data to search on every request made by a user. So, one problem with reservation systems using the above-described method is that the search procedure is both complicated and time-consuming. Hence, there is a need to provide a system and a method for making the search process simpler and more efficient still taking all the rules for the transportation companies into account.

### SUMMARY

One technical problem the invention proposes to solve is the complexity of the rules current systems are processing and which leads to huge computer resources requirement.

It is therefore one object of the present invention to provide a system and a method that allows a user to enter credentials and product preferences and perform a complete search that is less complex and faster. This is done while taking the rules of the transportation companies into account when products are travel items.

Another aspect of the invention is the use of previously created data to optimize other technical processes such as the generation of customized text portions. It can be used at a server side.

In one embodiment the invention couples products search means -such as a fare search engine known in the travel industry- and text generation means so as to take benefits within the second application of the data processed for the first application. In particular the invention uses reduced rules and relevant rules created during the search process and it re-uses this data for the text generation process. This deeply simplifies the text generation stage given the limited set of data to be processed. The reduced rules and the relevant rules can also be used by another application with the same advantage: these rules are of much smaller size than the typical rules so that computer efficiency is improved.

In a more specific manner, the present invention relates to a method for processing data applicable to a customer for at least one product, comprising the steps of:
- retrieving customer data,
- retrieving definition data for the at least one product, said definition data comprising fare data applicable to the at least one product,
- accessing at least one database of existing rules,
- selecting at least one rule from said at least one database, said at least one rule matching the customer data and the definition data, and further containing a plurality of records,
- filtering records irrelevant to said customer data and definition data within said at least one rule,
- selecting only records relevant to said customer data and definition data within said at least one rule,
- creating a reduced rule based only on the relevant records.

This method can be used as a method for automatically generating text portions applicable to a customer for one product.

In one embodiment, the at least one rule comprises a plurality of categories each comprising at least one record, the filtering step comprising filtering categories irrelevant to said customer data and definition data within said at least one rule and keeping only categories relevant to said customer data and definition data within said at least one rule and wherein the filtering step comprises for each relevant category filtering records irrelevant to said customer data and definition data within said at least one rule.

In one aspect of the invention, the method comprises the step of aggregating the definition data, the customer data and the reduced rule into a relevant rule.

In that case, the relevant rule represents a complex set of data aggregating all the information required for further processing such as text generation but, in the same time, it does not include useless rule information. The relevant rule is then an optimal base for the rest of the process.

The customer data may be entered by a user or saved in a database from a previous request. Likewise, the travel data may also be entered by a user or saved in a database from a previous request.

In one embodiment, the relevant rule is dynamically created upon every request from a traveler. Every time a user enters new information and starts a new search for products, a new request is initiated.

In another embodiment, the relevant rule is retrieved for subsequent actions within the same request. By actions, we refer to events performed by the same application. One application could for example store the rule as one action and displaying it to the user as another action.

In another embodiment, at least one application retrieves the relevant rule and uses it. Several applications could have access to this relevant rule. These applications could have subsequent or simultaneous access. Every application can perform multiple actions using the same relevant rule.

In a preferred embodiment, only the relevant text is displayed to the user such as on the passenger's ticket or on display means like a screen. So when a customer receives his ticket, he won't be bothered with a lot of information that is irrelevant to him, printed on the ticket or displayed. Examples will be described in further details later in this document.

It is also possible to retrieve said relevant rule for subsequent requests for a same customer.

Further options which can be use cumulatively or alternatively are introduced hereafter:
- said relevant rule is stored in computer storage means,
- it comprises retrieving said relevant rule for at least one subsequent action,
- it comprises retrieving said relevant rule for at least one subsequent product purchase request for the customer,
- it comprises the steps of:
   providing a text generation engine with the relevant rule,
   providing the text generation engine with generic text data,
   generating a customized text portion based on the generic text data and
   adapted in view of the relevant rule,
- the generic text data comprises a generic description text data of each record of the rule, the step of generating comprising:
   ■ selecting the generic description text data of the records matching the relevant rule,
   ■ adapting the selected generic description text data with the relevant rule data,
- it comprises sending the customized text portion to a remote device of a user for display,
- it comprises printing the customized text portion on a ticket,
- the customer data is entered by a user or retrieved from a database,
- the definition data is entered by a user or retrieved from a database,
- the product is a travel product and the customer is a traveler,
- the method is performed as a result of execution of computer software by at least one data processor, the computer software being stored in a non-transitory computer-readable memory medium.

The present invention further relates to a method for processing a user purchase request about at least one product dedicated to one customer, comprising:
- Receiving a user purchase request comprising search criteria,
- Obtaining customer data,
- searching for products matching the search criteria and the customer data and finding at least one product matching the search criteria and the customer data,
- retrieving definition data for the at least one product, said definition data comprising fare data applicable to the at least one product,
- accessing at least one database of existing rules,
- selecting at least one rule from said at least one database, said at least one rule matching the customer data and the definition data, and further containing a plurality of records,
- filtering records irrelevant to said customer data and definition data within said at least one rule,
- selecting only records relevant to said customer data and definition data within said at least one rule,
- creating a reduced rule based only on the relevant records,
- creating information data about the at least one product based on the reduced rule and sending said information data to the user.

This method may comprise at least one of the following options:
- it comprises the step of aggregating the product definition data, the customer data and the reduced rule into a relevant rule,
- the step of creating information data comprises:
   providing a text generation engine with the relevant rule,
   providing the text generation engine with generic text data,
   generating a customized text portion based on the generic text data and
   adapted in view of the relevant rule,
- it is performed as a result of execution of computer software by at least one data processor, the computer software being stored in a non-transitory computer-readable memory medium.

The invention also relates to a system for automatically generating a text portion applicable to a customer for at least one product, comprising means for executing the above method.

The present invention further relates to a system for processing data applicable to a customer for at least one product, comprising:
- Means for retrieving customer data,
- Means for retrieving definition data for the at least one product, said definition data comprising fare data applicable to the at least one product,
- Means for accessing at least one database of existing rules,
- Means for selecting at least one rule from said at least one database, said at least one rule matching the customer data and the definition data, and further containing a plurality of records,
- Means for filtering records irrelevant to said customer data and definition data within said at least one rule,
- Means for selecting only records relevant to said customer data and definition data within said at least one rule,
- Means for creating a reduced rule based only on the relevant records.

The invention also relates to a system for processing a user purchase request about at least one product dedicated to one customer, comprising:
- Means for receiving a user purchase request comprising search criteria,
- Means for obtaining customer data,
- Means for searching for products matching the search criteria and the customer data and for finding at least one product matching the search criteria and the customer data,
- Means for retrieving definition data for the at least one product, said definition data comprising fare data applicable to the at least one product,
- Means for accessing at least one database of existing rules,
- Means for selecting at least one rule from said at least one database, said at least one rule matching the customer data and the definition data, and further containing a plurality of records,
- Means for filtering records irrelevant to said customer data and definition data within said at least one rule,
- Means for selecting only records relevant to said customer data and definition data within said at least one rule,
- Means for creating a reduced rule based only on the relevant records,
- Means for creating information data about the at least one product based on the reduced rule and sending said information data to the user.

These systems may comprise computer software stored in a non-transitory computer-readable memory medium that is executed by at least one data processor that comprises part of the system.

The present invention also relates to a computer program product storing a computer program comprising instructions adapted to perform the method of the invention.

### BRIEF DESCRIPTION OF THE DRAWINGS

The present invention will now be described in details with reference to the drawings for the purpose of illustrating the preferred embodiment.
Figure 1 illustrates a block diagram comprising the invention.
Figure 2 illustrates one application of an embodiment of the present invention.
Figure 3 illustrates a block diagram of an embodiment of the present invention.

### DETAILED DESCRIPTION

The invention can be implemented with computer hardware and software means. It can include a server side where the processing of data applicable to a customer takes place. This server side-which may be comprised of a single or plural computer devices- preferably communicates via network resources with at least one remote user device such as but not exclusively a desktop computer, a smart phone or the like.

A few definitions are given hereafter:
- "product" here means any goods or services that can be purchased; this includes perishable goods like travel products including flight tickets, hotel or car reservation.
- "rules": a product is defined by data describing the content of the product as well as the price context of the product which means the price amount but also the conditions applying to the product. Rules are typically used for determining such conditions and rules are often linked to the fare type used for pricing the product: a product made of a first class ticket for one flight will be assigned a price depending on first class fare parameters and will be associated with some conditions of purchase, of use or of refund (which includes exchange or reissuance). At least some of these conditions are governed by rules.
- "user" here means a person interacting with the invention's system and in particular a person who enters and sends a request to a remote server.
- "customer" here means the person who benefits from the product. Typically he is the traveler in case of travel products. He can also be the "user": for example, for travel reservations, the customer may access to a reservation system trough a specialized website often called online travel agencies. The "user" may however be another person such as a travel agent acting on behalf of the customer for handling a request.

The detailed description of a preferred embodiment is given hereafter in the case of travel products such as flights operated by Airlines. We hereby show how a typical rule is structured in this field.

Within each rule, there are *categories* that are designed by a number. A category describes the conditions in a given area. For example, we have:
1 → Eligibility ...
...
19 → Children discount ...
...
Etc

Inside a category, there are items called *Records* 2 hereafter also simply called records. Each of them is composed of a set of elements called matching elements (loc 1, loc2, effective and discontinued dates, ...) that define which record 2 is applicable for a given trip.

A record 2 contains a string of records 3. Each record 3 defines a given set of restrictions for the category.

So we have to summarize:
- Rule
   ○ Category
      ■ Record 2
         • Matching elements (locations, dates, ...)
         • String of records 3
      ■ Record 2
         • Matching elements (locations, dates, ...)
         • String of records 3
      ■ ...
   ○ ...

Let's take a simple example:
- Rule AF01
   ○ Category 1 - Eligibility
      ■ Record 2
         • Between Paris and London
         • String with 2 records 3 linked with OR
            ○ Passenger must be a soldier
            ○ OR
            ○ Passenger must be a clergyman
   ○ Category 12 - Surcharges
      ■ Record 2
         • Between Paris and London
         • String with 1 record 3
            ○ If passenger flights in Business class he will pay a surcharge of 2000$

When a client wants to buy a ticket, the reservation system proposes only solutions for which the rule has been verified against the passenger data and the requested travel.

For example, given a fare from Paris to London with the rule AF01 attached to it:
- A passenger who is a student will not be able to buy this fare because he is not a soldier nor a clergyman
- A passenger who is a soldier will be able to buy the fare, in addition:
   ○ He will pay a surcharge if he travels in business class
   ○ Otherwise no surcharge will be paid

Through this example we have seen that some records 3 of the rule must be matched by the passenger and its itinerary so that the solution can be selected: it is the case for eligibility. For other categories, the matching is not mandatory; it will only modify the solution but not prevent to sell it: it is the case for surcharges.

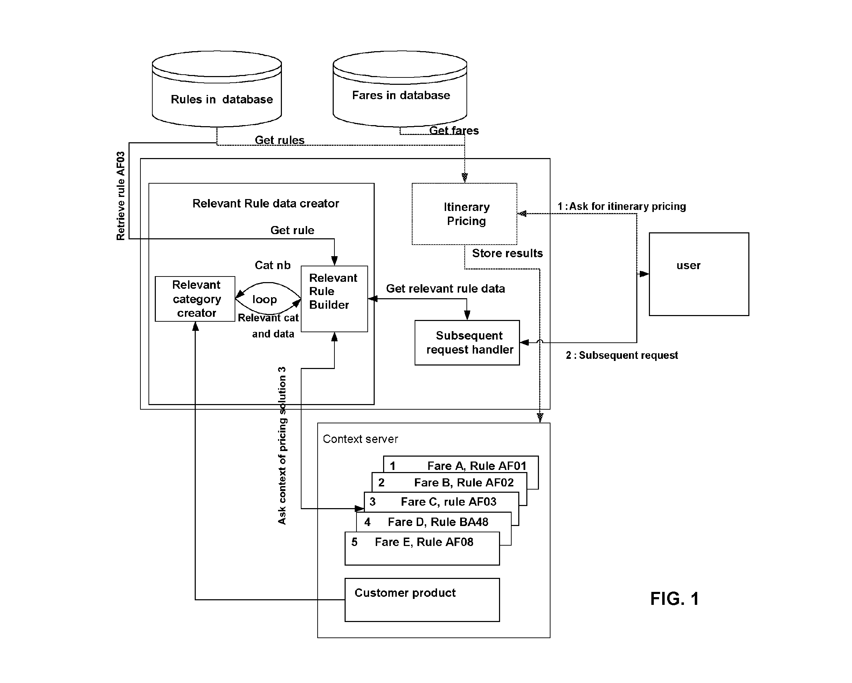

With reference with figure 1, the instant invention can be implemented as a part of a computerized reservation system. In one preferred embodiment, the relevant rule data creator (the grayed out area) is part of a more global system including a fare search device such as a low fare search engine working on the basis of fare data and rule data stored in databases of computer storage means and using search criteria in input. Typically the search criteria are provided by the user. Criteria chosen among origin, destination, departure and arrival dates, age of the traveler can be used.

In figure 1 we see a block diagram of a ticket searching and reservation system comprising the invention. When a user of the travel industry, who can also be the traveler, wants to search for a travel, he enters his travel preferences in term of departure date and place and destination amongst others. This is represented in figure 1 by the arrow called "1: Ask for itinerary pricing". The itinerary pricing is then calculated using a database containing fares and a database containing rules. These databases of fares and rules might be external belonging to different airline companies. Once the itinerary pricing is calculated, it is forwarded and displayed to the user and at the same time it is stored on a context server. The displaying to the user and the storing of the itinerary pricing could be done simultaneously or sequentially in both orders. The itinerary pricing generally leads to the determination of a plurality of product options the user can purchased. In another embodiment the context server stores products the user has actually purchased. The rule data processing of the invention can thus be applied to data of already purchased products or to products simply offered for sale.

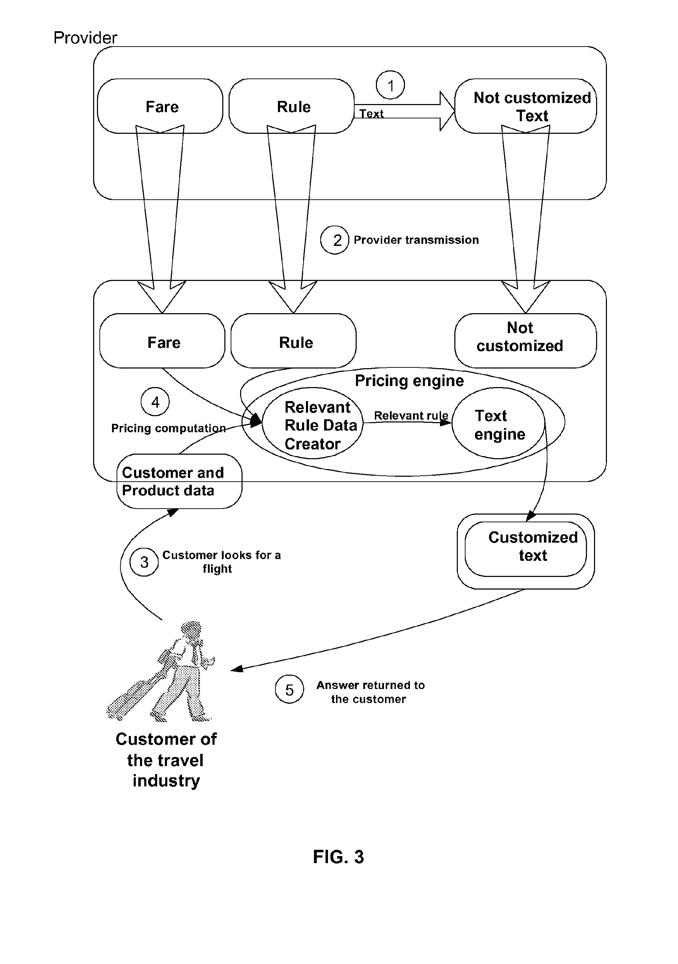

The user might now enter a subsequent request, illustrated by the arrow called "2: subsequent request". This request is forwarded to a subsequent request handler. This handler can be any kind of application having to use data of rules. The other application using the data created by the invention can also be a text generation means such as the text engine depicted in figure 3.

One important aspect of the invention is the creation of a reduced rule which can serve as component of a relevant rule also comprising product definition data and customer data. The Relevant Rule Data is preferably composed of:
- *A reduced rule that is*
   ○ *Sufficient: This rule is exhaustive regarding what applies to the customer and the product*
   ○ *Minimal: This rule is also the smallest possible*
- *customer and product data applied by the pricing process on the reduced rule.*

A concrete example is given hereafter for the case of travel industry rules:
Reduced rule : It respects the format of a rule, with categories, records 2 and records 3 as described above, however we call it reduced because its content is minimized thanks to the invention's process.
Sufficient : It means that the reduced rule contains:
   ■ All elements that need to be validated to allow the passenger to buy this solution for this travel
      ○ For example, if the rule AF01 has been matched and allowed the fare to be sold because the passenger was a soldier, we must find in the reduced rule a condition on the fact that the passenger must be a soldier.
         - All elements that have an impact on the retained solution, such as surcharges, discounts, etc ...
      ○ For example, if a surcharge of 200$ has been added to the price of the solution because the solution was in business class, such a condition must appear in the reduced rule.
         - All elements that have an impact on future conditions applying for this ticket
      o For example, if there is a category coded to say that the ticket is non-refundable it must still appear in the reduced rule.
Minimal : The reduced rule that we build is the smallest possible.
   - For example, in the rule AF01, we have 2 records 3 for the category 1, the first one says that the fare is valid for soldiers and the other one for clergymen. If we sell the fare to a soldier, we will remove the information about clergymen from the reduced rule.
   - Another example: if the soldier decides to travel in economy class, the surcharge for business class will not apply to him, as a result this information is not needed in the reduced rule.

Customer data and travel product definition data applied by the pricing process on the reduced rule : It means that we store, along with the reduced rule, the passenger and travel data that match any of the conditions kept in the reduced rule. Product data such as travel data may include in dates, stop over data, origin, destination, flight number...

For example, if a passenger has a discount of 20% allowed by the category 19 (children discount) of the rule because he is 13 years old, this information will be kept in the 'Relevant Rule Data'.

So we use the knowledge of the pricing process to reduce the records in the categories to the minimum and thereby creating a traveler reduced ruled.

Figure 1 shows an example of creation of the relevant rule in which a relevant category creator and a relevant rule builder are illustrated. When starting a relevant rule creation process one product is considered within the products for which the context server holds the definition data. The definition data of the product are retrieved from the context server which advantageously also holds the customer data even though it is not a limitation of the invention. Customer data may also be obtained from another repository. Customer data may include job title and age information, home location some special requirements notably for disabled people, frequent flyer card ownership...

The rule used for applying a fare to the product and for calculating a price is also retrieved from the rules database by a "get" instruction of the relevant rule builder. Then for each category of the rule, the relevant rule builder calls the relevant category creator. It works as follows:
For a given category:
   - Determination of whether this category will appear in the reduced rule, it is kept if
      ○ It is a mandatory match to satisfy the rule
         ■ Could be for black out dates, for example on category 11
      ○ It modifies the travel solution
         ■ Could be for a surcharge, for example on category 12
         ■ Could be for a discount, for example on category 19
      ○ It contains conditions on future events
         ■ Refund, which is category 33
         ■ Reissue, which is category 31
         ■ Penalties, which is category 16
   - Then work is performed on the records and especially on record 2 string as far as current format of the travel industry is concerned. Records 3 in the string can be linked with 'OR' or 'AND' relational indicators, depending on the category. The process is, for:
      ○ OR relational indicator : The process isolates the record 3 of the string that has been matched by the pricing process and ignores the other records 3
      ○ AND relational indicator : The process isolates the records 3 that match and ignores the other records 3
   - Then work is performed on the records 3 that have been retained, we use our knowledge of the pricing process to reduce the records 3 to the minimum:
      ○ The idea is that a single record 3 coming from a string with 'OR' relational indicator could then be reduced depending on the fields that have been matched by the pricing process. For records 3 coming from a string with 'AND' relational indicator, it could be possible to factorize several records 3 into a single one or to reduce each of them.

This process is looped for all the categories and the relevant rule builder then selects the minimal rule data for producing the reduced rule which is then aggregated with product definition data as well as customer data to form the relevant rule. It is also executed for all products requiring a relevant rule creation.

The relevant rule(s) are advantageously stored for a duration corresponding to the duration of the product. In the airline industry, the relevant rule is kept until the end of the journey or the expiration date of the passenger name record. Subsequent retrievals of the relevant rules can be made thanks to unique identifiers assigned to the relevant rules.

We will now describe an embodiment where an application is using the relevant rule. In this example, the relevant rules are taken as basis for generating text portions in an efficient fashion.

When a passenger buys a ticket for an itinerary, two main components define this ticket:
- The fares containing the origin/destination and the price
- For each fare, a rule containing the conditions of application of the fare.

It is useful to have a text to describe the conditions contained in the rule. Today this text is generally generated in advance from the rules data.

When a customer buys a ticket, it is only possible to show him the pre-generated text.

The problem with this functioning is that the text contains, in addition to the specific conditions applying to the customer, many other conditions that do not apply to him. This makes the text difficult to read and partially irrelevant for the customer.

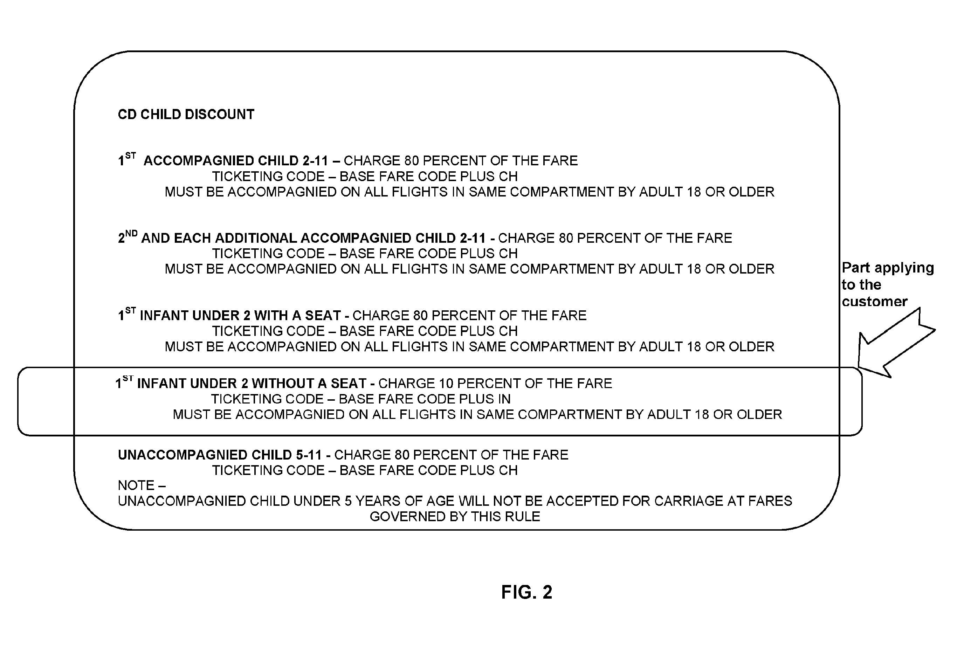

For example, if a passenger travels with his child, who is less than two years old, he will see in the text that the price of the child's ticket is 10% of the normal price, which is interesting for him. But, he will see also other conditions that do not apply to him. Figure 2 shows all the rules the traveler will access while buying the ticket. The highlighted portion is the only part that is actually relevant to him.

This text output is not satisfactory because the text is too general. A travel agent or the customer would have to read it entirely to determine which conditions apply to the passenger. Furthermore, this text cannot be used on web sites, where only relevant information must be presented to the user.

By using the relevant rule applied to the client, only the highlighted area of figure 2, which is the relevant part to the client, will be displayed to him. This relevant rule could equally be displayed on the ticket of the traveler.

Therefore, a ticket with this passenger-customized rule printed on it is one embodiment of the present invention. An alternative is a display of this limited and customized information on a screen of an electronic device such as a personal computer but also a mobile device which typically embeds only a small-sized screen. Although the following example is for text generation process at the time the booking is made, further texts may be generated thanks to the invention such as warning customized texts triggered when a flight is disrupted and to be sent as reduced data set via SMS (short message service) communication. Storing the relevant rule for further processing prevents from attempting to re-build the rule after the pricing process is over. It is often complicated to operate this kind of data treatment for past transactions since the context may have changed, rules and fares may have evolved...The relevant rules are thereby a set of data which keeps a track of the past transaction and which prevent deep further processing such as re-pricing a past ticket.

In figure 3 a block diagram shows how this is performed. The system actually produces a rules customized text on the fly, based on the relevant rules and the data received from the customer.

Inclusion of passenger's travel concrete details, such as dates or city names is achieved thanks to the knowledge of the passenger's data, and suppression of parts of the text that appear in the generic text and that do not apply to the customer is achieved thanks to a close integration of the system into the pricing engine, in order to know which parts of the rules are relevant for the customer.

Describing figure 3, the flow below shows how the invention works. First, the system receives fares data from providers like ATPCo and SITA (2). Those data include the static rule text, generated in advance from the rules data (1). When a customer of the travel industry looks for a ticket, he enters information, like the destination or wished travel dates (3).

Based on the customer information and data received from providers, the pricing engine computes a proposition for the customer (4).

Now, instead of returning the answer along with the generic text to the customer, the instant invention uses the previously described relevant rule as basis for the text generation by a dedicated engine. (5)

The ticket information with the customized text is returned to the user. (6)

The technical interest of this method will be made clearer in view of the concrete example given below:

### Example 1 : For a travel to London on 10^{th} October 2010, using the relevant rule data containing passenger's travel details we can simplify the generic text of the category maximum stay

### Current generic text:

MX. MAX STAY
RETURN TRAVEL FROM LAST POINT OF STOPOVER MUST COMMENCE NO LATER THAN ONE MONTH AFTER DEPARTURE FROM ORIGIN

### Customized text:

MX. MAX STAY
RETURN TRAVEL FROM LONDON MUST COMMENCE BEFORE 10 NOV 2010

Example 2: Suppression of generic text that does not apply to the customer. In this example a discount is applied to a child aged between 2 and 11.

### Current generic text:

CD.CHILD DISCOUNTS
1ST ACCOMPANIED CHILD 2-11 - CHARGE 80 PERCENT OF THE FARE. TICKETING CODE - BASE FARE CODE PLUS CH.
MUST BE ACCOMPANIED ON ALL FLIGHTS IN SAME COMPARTMENT BY ADULT 18 OR OLDER.
2ND AND EACH ADDITIONAL ACCOMPANIED CHILD 2-11 - CHARGE 80 PERCENT OF THE FARE.
TICKETING CODE - BASE FARE CODE PLUS CH.
MUST BE ACCOMPANIED ON ALL FLIGHTS IN SAME COMPARTMENT BY ADULT 18 OR OLDER.
1ST INFANT UNDER 2 WITH A SEAT - CHARGE 80 PERCENT OF THE FARE.
TICKETING CODE - BASE FARE CODE PLUS CH.
MUST BE ACCOMPANIED ON ALL FLIGHTS IN SAME COMPARTMENT BY ADULT 18 OR OLDER.
1ST INFANT UNDER 2 WITHOUT A SEAT - CHARGE 10 PERCENT OF THE FARE.
TICKETING CODE - BASE FARE CODE PLUS IN.
MUST BE ACCOMPANIED ON ALL FLIGHTS IN SAME COMPARTMENT BY ADULT 18 OR OLDER.
UNACCOMPANIED CHILD 5-11 - CHARGE 80 PERCENT OF THE FARE.
TICKETING CODE - BASE FARE CODE PLUS CH. NOTE -
UNACCOMPANIED CHILD UNDER 5 YEARS OF AGE WILL NOT BE ACCEPTED FOR CARRIAGE AT FARES GOVERNED BY THIS RULE.

By using the relevant rule data we could obtain a text narrowed down to what applied to the passenger:

### Customized text:

CD.CHILD DISCOUNTS
   1ST ACCOMPANIED CHILD 2-11 - CHARGE 80 PERCENT OF THE FARE. TICKETING CODE - BASE FARE CODE PLUS CH.
MUST BE ACCOMPANIED ON ALL FLIGHTS IN SAME COMPARTMENT AN ADULT 18 OR OLDER.

Although illustrative embodiments of the present invention have been described in detail with reference to the accompanying drawings, it is to be understood that the invention is not limited to those precise embodiments and that changes and modifications may be effected therein by those in the art without departing from the scope and spirit of the invention.

## Claims

1. Method for automatically generating a text portion applicable to a customer for at least one product, **characterized in that** it comprises, at a server side, the steps of:
- retrieving customer data,
- retrieving definition data for the at least one product, said definition data comprising fare data applicable to the at least one product,
- accessing at least one database of existing rules,
- selecting at least one rule from said at least one database, said at least one rule matching the customer data and the definition data, and further containing a plurality of records,
- filtering records irrelevant to said customer data and definition data within said at least one rule,
- selecting only records relevant to said customer data and definition data within said at least one rule,
- creating a reduced rule based only on the relevant records,
- aggregating the definition data, the customer data and the reduced rule into a relevant rule,
- providing a text generation engine with the relevant rule,
- providing the text generation engine with generic text data,
- generating a customized text portion based on the generic text data and adapted in view of the relevant rule.

2. Method according to the preceding claim wherein the at least one rule comprises a plurality of categories each comprising at least one record, the filtering step comprising filtering categories irrelevant to said customer data and definition data within said at least one rule and keeping only categories relevant to said customer data and definition data within said at least one rule and wherein the filtering step comprises for each relevant category filtering records irrelevant to said customer data and definition data within said at least one rule.

3. Method according to the preceding claim wherein the generic text data comprises a generic description text data of each record of the rule, the step of generating comprising:
- selecting the generic description text data of the records matching the relevant rule,
- adapting the selected generic description text data with the relevant rule data.

4. Method according to any of the preceding claims, comprising sending the customized text portion to a remote device of a user for display.

5. Method according to any of the preceding claims, comprising printing the customized text portion on a ticket.

6. Method according to any of the preceding claims, wherein said relevant rule is stored in computer storage means.

7. Method according to the preceding claim, further comprising retrieving said relevant rule for at least one subsequent action.

8. Method according to any of the two preceding claims, further comprising retrieving said relevant rule for at least one subsequent product purchase request for the customer.

9. Method according to any of the preceding claims, where the customer data is entered by a user or retrieved from a database.

10. Method according to any of the preceding claims, where the definition data is entered by a user or retrieved from a database.

11. Method according to any of the preceding claims wherein the product is a travel product and the customer is a traveler.

12. Method according to any of the preceding claims performed as a result of execution of computer software by at least one data processor, the computer software being stored in a non-transitory computer-readable memory medium.

13. System for automatically generating a text portion applicable to a customer for at least one product, comprising :
- means for retrieving customer data,
- means for retrieving definition data for the at least one product, said definition data comprising fare data applicable to the at least one product,
- means for accessing at least one database of existing rules,
- means for selecting at least one rule from said at least one database, said at least one rule matching the customer data and the definition data, and further containing a plurality of records,
- means for filtering records irrelevant to said customer data and definition data within said at least one rule,
- means for selecting only records relevant to said customer data and definition data within said at least one rule,
- means for creating a reduced rule based only on the relevant records,
- means for aggregating the definition data, the customer data and the reduced rule into a relevant rule,
- means for providing a text generation engine with the relevant rule,
- means for providing the text generation engine with generic text data,
- means for generating a customized text portion based on the generic text data

14. The system of the preceding claim, comprising computer software stored in a non-transitory computer-readable memory medium that is executed by at least one data processor that comprises part of the system.

15. The system of any of the two preceding claims comprising means for executing the method of any of claims 1 to 12.

16. Computer program product storing a computer program comprising instructions adapted to perform the method of any of claims 1 to 12.
